# EUROPÄISCHE PATENTANMELDUNG

(11) **EP 2 028 082 A1**
(43) Veröffentlichungstag der Anmeldung: **25.02.2009**
(21) Anmeldenummer: 08014812.5
(22) Anmeldetag: 21.08.2008
(51) Int. Cl.: B62D 25/08, B60H 1/24, B60K 11/08

(54) **Montageträger für ein Kraftfahrzeug**

(30) Priorität: 21.08.2007 DE 102007040497
(71) Anmelder: Decoma (Germany) GmbH, 66280 Sulzbach (DE)
(72) Erfinder: Steinke, Jürgen, 73257 Köngen (DE); Sailer, Gottfried, 73601 Ebersbach (DE)
(74) Vertreter: Deissler, K. Michael

(57) **Zusammenfassung**

Es werden ein Montageträger (140) für ein Kraftfahrzeug und ein oberer Querträger (142) für einen solchen Montageträger beschrieben. Der Montageträger weist einen oberen Querträger (142) und nach unten hin anschließende Seitenträger (146) auf, wobei der obere Querträger im Bereich seiner Endabschnitte (148) nach unten gebogen ausgebildet ist.

## Beschreibung

Die Erfindung betrifft einen Montageträger für ein Kraftfahrzeug, insbesondere für den Frontbereich eines Kraftfahrzeugs, und einen oberen Querträger für einen solchen Montageträger.

### Hintergrund der Erfindung

Montageträger, die aus Kunststoff oder Metall oder in Hybridbauweise aufgebaut sein können, werden im modernen Fahrzeugbau vornehmlich im Frontbereich dieser Fahrzeuge eingesetzt. Dabei muss insbesondere eine ausreichend hohe Steifigkeit des Frontbereichs des Fahrzeugs und eine optimierte Krafteinleitung gewährleistet sein, wobei versucht wird, eine ausreichende Stabilität bei möglichst geringem Gewicht sicherzustellen.

Darüber hinaus wird im Rahmen der stetig wachsenden Anforderungen hinsichtlich des Fußgängerschutzes immer mehr Wert darauf gelegt, dass nicht nur die Insassen in dem Kraftfahrzeug geschützt sind, sondern auch Fußgänger bei einer Kollision mit einem Fahrzeug weniger schwerwiegende Verletzungen erfahren. Bei einer Kollision eines Kraftfahrzeugs mit einem Fußgänger sind vornehmlich die Beine, die Hüfte und der Kopf des Fußgängers gefährdet.

Ein besonderer Schwerpunkt der Bemühungen liegt darauf, eine nachgiebigere Fahrzeugfront zu entwickeln, die die Energie absorbiert und somit das Verletzungsrisiko für Fußgänger verringert. Weiterhin wird auf eine Verformbarkeit der Motorhaube entweder durch passive Maßnahmen, wie bspw. eine Absenkung des Motorblocks, eine deformierbare Anbindung der Kotflügel und der Scharniere, oder durch aktive Lösungen, wie bspw. eine Anhebung der Haube nach Erkennung eines Fußgängeraufpralls durch einen Sensor, geachtet. Insbesondere wird dabei eine Verformbarkeit der Motorhaube und der in unmittelbarer Nähe zur Motorhaube befindlichen Komponenten angestrebt.

Gegenwärtige Bauformen von Montageträgern, bspw. von Kunststoffmontageträgern, weisen eine horizontal verlaufende Oberkante auf, die durch einen oberen Querträger, der auch als Schlossbrücke bezeichnet wird, gegeben ist. Es sind weiterhin Seitenträger vorgesehen, die vertikal in Richtung der Fahrbahn verlängert sind. Zur Verstärkung ist die Montage und/oder das Umspritzen, und zwar in einem Hybridverfahren, von Verstärkungsteilen bekannt.

Es ist zu beachten, dass der obere Querträger in der Regel mindestens ein Schloss und/oder Fanghaken zur Sicherung der Motorhaube trägt. Dabei muss sichergestellt sein, dass bei einer zufälligen Entriegelung der Motorhaube diese sich trotz einer nach oben gerichteten Kraft nicht öffnet. Hierbei muss der obere Querträger erhebliche Kräfte aufnehmen.

Bei einem sogenannten Frontklappenversuch, bei der eine Krafteinleitung an einem Fanghaken mittig an der Oberkante des Montageträgers in vertikaler Richtung erfolgt, wird darauf geachtet, dass auftretende Kräfte möglichst auf dem kürzesten Weg in die seitlichen Vertikalbereiche eingeleitet werden. Unter Berücksichtigung der Bauteilgestaltung mit Verstärkungsteilen, wie z.B. Einlegebleche, oder mit der Kunststoffgestaltung, wie z.B. die Rippenauslegung, und Materialien wird somit eine optimierte Abstimmung der Materialien, d.h. der Materialkombinationen und der Wandstärken, auf die erforderlichen Belastungen ermöglicht.

Es ist weiterhin bekannt, im vorderen Bereich von Kraftfahrzeugen Luftführungen zur Rohluftansaugung vorzusehen, die in der Regel vor dem Motor des Fahrzeugs angebracht sind und für eine Luftzufuhr zu dem Motor sorgen. Dabei ist bspw. bekannt, solche Luftführungen durch Bilden von Einlassöffnungen am oberen Querträger des Fahrzeugs auszubilden.

### Zusammenfassung der Erfindung

Der vorgestellte Montageträger für ein Kraftfahrzeug weist einen oberen Querträger und nach unten hin anschließende Seitenträger auf. Dabei ist der obere Querträger, der auch als Schlossbrücke bezeichnet wird, im Bereich seiner Endabschnitte nach unten gebogen ausgebildet. Diese Endabschnitte sind somit integrierte bzw. integrale Bestandteile des oberen Querträgers und damit des Montageträgers, die nicht lösbar, mindestens nicht zerstörungsfrei lösbar, mit dem oberen Querträger und üblicherweise den Seitenträgern verbunden sind. Der obere Querträger ist durchgehend mit einem Verstärkungsmaterial versehen. D.h. auch im Bereich der Endabschnitte ist das Material verstärkt. Die Verstärkung kann aus Metall, wie bspw. Stahl oder Aluminium, Kunststoff, glasfaserverstärktem Kunststoff, einem Rohr bestehen.

In Ausgestaltung sind die Endabschnitte des Montageträgers im wesentlichen in einem Winkel von 45° nach unten gebogen ausgebildet.

Der obere Querträger kann aus einem Metall, einem Kunststoff oder aus einer Metallkombination aus Metall und Kunststoff, bspw. als Hybridbauteil, gefertigt sein. Als Kunststoffe kommen glasfaserverstärkte Kunststoffe, Polyamide, Polypropylene, die auch glasfaserverstärkt sein können, in Betracht. Als Metall kommen bspw. Stahl und Aluminium zum Einsatz.

In Ausgestaltung sind zusätzlich seitliche Verstärkungsteile vorgesehen.

Weiterhin kann im Bereich des oberen Querträgers zumindest eine Luftführung für Rohluftansaugung des Kraftfahrzeugs vorgesehen sein. Diese kann wahlweise oberhalb oder unterhalb des oberen Querträgers liegen.

Diese Luftführung kann als Schlauch mit einer Lufteinlassöffnung und mit einer Luftauslassöffnung gebildet sein, wobei der Schlauch bzw. die Luftführung derart ausgebildet ist, dass ein Querschnitt des Schlauchs bzw. der Luftführung verändert werden kann.

Der Schlauch ist in Ausgestaltung als Faltenbalg ausgeführt.

Weiterhin kann bei der Luftführung eine Arretierungseinrichtung zum Festsetzen des Querschnitts im Bereich der Lufteinlassöffnung vorgesehen sein.

Der vorgestellte Montageträger gestattet, zumindest in den beschriebenen Ausführungen, verbesserte Einstellmöglichkeiten für Deformationsstrukturen sowie eine leichtere Bauweise. Es ergibt sich eine allgemeine Gewichtsreduzierung und eine Kostenersparnis. Zudem ist der Montageträger besser für eine Krafteinleitung in tragende Strukturen ausgelegt. Wichtig ist, dass die optimierte Krafteinleitung integrierter Bestandteil des Montageträgers ist und nicht, zumindest nicht zerstörungsfrei, demontierbar ist.

Ein vorgestellter oberer Querträger für einen Montageträger, insbesondere für einen Montageträger der vorstehend beschriebenen Art, ist im Bereich seiner Endabschnitte nach unten gebogen ausgeführt und im Bereich der festen Rohbaustruktur, bspw. der Längsträgerebene, gefügt.

In Ausgestaltung weist der obere Querträger im Bereich seiner Oberkante deformierbare Abschnitte auf. Ist der horizontal verlaufende Bereich der Oberkante des Querträgers und somit des Montageträgers bspw. zwischen den Scheinwerfern aus einem deformierbaren Material, wie z.B. Kunststoff, aufgebaut, wird dadurch die Abbildung einer nachgiebigen Geometrie ermöglicht, die den Erfordernissen hinsichtlich des Fußgängerschutzes entgegenkommt.

Bei einer Ausführung trägt der obere Querträger im oberen Bereich mindestens eine Luftführung für Rohluftansaugung des Kraftfahrzeugs.

Bei dem Querträger können seitliche Verstärkungsteile vorgesehen sein.

Es wird weiterhin eine Luftführung zur Rohluftansaugung eines Kraftfahrzeugs beschrieben, die als Schlauch, bspw. aus einem Kunststoff, mit einer Lufteinlassöffnung und einer Luftauslassöffnung gefertigt bzw. ausgebildet ist, wobei der Schlauch derart gestaltet ist, dass ein Querschnitt des Schlauchs bzw. der Luftführung verändert werden kann. Die nachstehend beschriebene Luftführung kann in Verbindung mit dem vorstehend beschriebenen Montageträger und dem vorstehend dargelegten oberen Querträger verwendet werden.

Da ein Querschnitt des Schlauchs der beschrieben Luftführung geändert werden kann, ist es möglich, dass der Schlauch bei Einwirken einer äußeren Kraft, wie bspw. bei einem Aufprall oder einer Kollision mit einem Fußgänger, nachgibt, so dass die Luftführung im Frontbereich des Fahrzeugs einem Nachgeben des gesamten Bereichs nicht entgegenwirkt und damit das Verletzungsrisiko für Fußgänger verringert wird, da die Aufprallenergie zumindest teilweise durch Verformen des Kraftfahrzeugs in diesem Bereich aufgenommen wird.

Die Veränderbarkeit eines Querschnitts des Schlauchs bedeutet somit, dass die Luftführung ihre Form ändern kann, also bspw. nachgiebig ist, und somit eine von außen wirkende Kraft aufnehmen kann.

Der Schlauch kann als Faltenbalg ausgeführt sein. Das heißt, dass die Wandung des Schlauchs zumindest abschnittsweise mit Falzen versehen ist, die ein Zusammenfalten des Schlauchs, zumindest in einem gewissen Bereich und zu einem gewissen Maße, ermöglichen. Durch Zusammenklappen des Schlauchs bzw. durch Zusammenklappen oder Zusammenfalten der Wandung oder eines Wandungsabschnitts des Schlauchs verändert sich der Querschnitt des Schlauchs in einem vorab festgelegten Bereich. Anstelle der Falze, die ein ziehharmonikaartiges bzw. leporelloartiges Zusammenfalten des Schlauchs ermöglichen, kann auch eine Anordnung gewählt werden, die ein teleskopartiges Zusammenklappen des Schlauchs ermöglicht. Wichtig ist dabei, dass ein Querschnitt des Schlauchs und damit der Luftführung, bspw. bei Einwirken einer äußeren Kraft, verändert werden kann.

Der Schlauch kann bspw. eine Anzahl von Seitenteilen aufweisen, von denen mindestens eines faltbar ist. In diesem Fall wird der Schlauch von einer Anzahl von Seitenteilen gebildet, die entlang ihren Längskanten miteinander verbunden sind, um einen geschlossenen Schlauch mit einer Lufteinlassöffnung und einer Luftauslassöffnung zu bilden.

Alternativ kann der Schlauch auch durch eine Mantelfläche mit bspw. rundem Querschnitt gebildet sein, die nicht aus einzelnen Seitenteilen sondern einstückig gebildet ist.

Die Luftführung bzw. der Schlauch sind bspw. in einer Ausführung derart ausgestaltet, dass ein Querschnitt im Bereich der Lufteinlassöffnung verändert werden kann. Dies bedeutet, dass der Querschnitt im Bereich der Lufteinlassöffnung variiert werden kann, was bspw. durch Einwirken einer äußeren Kraft im Betrieb des Fahrzeugs der Fall ist. Somit lässt sich die durch die Lufteinlassöffnung definierte Lufteinlassfläche verändern.

Alternativ ist der Schlauch derart gestaltet, dass sein Querschnitt im gesamten Bereich von der Lufteinlassöffnung bis zur Luftauslassöffnung verändert werden kann. Dabei kann die Veränderung einheitlich oder nicht einheitlich bzw. ungleichmäßig sein, d.h. das Maß der Veränderung ist abhängig vom Ort.

Der Schlauch kann bspw. aus einem flexiblen, elastischen oder auch nachgiebigen Kunststoff gefertigt sein. Dieser Kunststoff kann auch bspw. mit einer Glasfaser verstärkt sein. Diese Eigenschaft des verwendeten Materials ermöglicht alleine die Veränderbarkeit der Querschnittsfläche. Zusätzlich können selbstverständlich Falze in der Wandung des Schlauchs vorgesehen sein. Diese Falze, die auch als Knickkanten oder Faltkanten bezeichnet werden, sind bspw. durch ein Vorabbiegen bzw. Vorabfalten oder durch eine Verringerung der Materialstärke eingebracht.

In Ausgestaltung ist eine Arretierungseinrichtung vorgesehen, mit der der Querschnitt, bspw. im Bereich der Lufteinlassöffnung, feststellbar ist.

Alternativ oder ergänzend kann auch eine Einstelleinrichtung zum Einstellen des Querschnitts, bspw. im Bereich der Lufteinlassöffnung, vorgesehen sein.

In Ausgestaltung sind an der Luftführung Befestigungselemente vorgesehen, die ein Befestigen der Luftführung an dem Frontendmodul oder dem Montageträger ermöglichen. Diese Befestigungselemente können angeformte Geometrien, wie bspw. Rasthaken, Nutführungen usw., sein. Alternativ oder ergänzend können Schrauben, Nieten usw. vorgesehen sein.

Als Materialien für den Schlauch kommen bspw. Polypropylen oder auch Polyamid in Frage.

Die beschriebene Luftführung weist, zumindest in den einigen Ausführungsformen, eine Reihe von Vorteilen auf. Insbesondere ist diese dazu geeignet, weitgehend unabhängig vom Fahrzeugtyp auf einfache Weise angebracht zu werden. Ebenso können die Anforderungen hinsichtlich des Fußgängerschutzes erfüllt werden.

Weiterhin ist es möglich, den Montageträger selbst einfacher zu gestalten, da die Luftführung ein separates Bauteil darstellt, das an dem Montageträger anzubringen ist. Dabei kann die Luftführung mit einer Abdeckung zu einem Bauteil integriert werden.

Die Veränderung eines Querschnitts ermöglicht die Verringerung der z-Höhe des Montageträgers. Zudem ist eine optimierte Gestaltung der Aufprallzone, insbesondere im Bereich der Hüfte eines Fußgängers, der sogenannten Hüftaufprallzone, realisierbar.

Der eingangs beschriebene Montageträger für ein Frontendmodul eines Kraftfahrzeugs kann derart ausgeführt sein, dass an diesem mindestens eine Luftführung der vorstehend beschriebenen Art angebracht ist. Die Luftführung wird typischerweise an einem sogenannten Obergurt bzw. oberen Querträger, der Teil des Frontendträgers bzw. Montageträgers ist, angebracht.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurzbeschreibung der Zeichnung

Die Erfindung ist anhand von Ausführungsbeispielen in der Zeichnung schematisch dargestellt und wird im folgenden unter Bezugnahme auf die Zeichnung ausführlich beschrieben.
Figur 1 zeigt einen möglichen Einsatz einer Ausführungsform der Luftführung.
Figur 2 zeigt eine weitere mögliche Ausführungsform der Luftführung.
Figur 3 zeigt eine Ausführung des vorgestellten Montageträgers.
Figur 4 zeigt Einlegebauteile eines oberen Querträgers.
Figur 5 zeigt eine weitere Ausführung des Montageträgers.
Figur 6 zeigt einen Ausschnitt aus Figur 5.
Figur 7 zeigt einen weiteren Ausschnitt aus Figur 5.

### Detaillierte Beschreibung der Erfindung

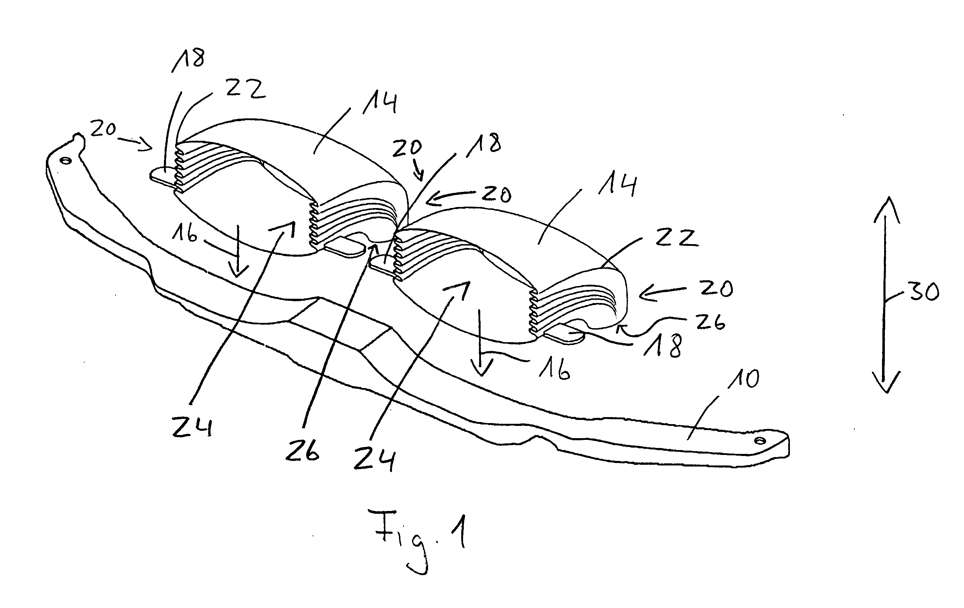

In Figur 1 ist ein Obergurt 10 als Teil eines Montageträgers in einem Frontendmodul eines Kraftfahrzeugs dargestellt. Der Montageträger befindet sich damit unter der Motorhaube (nicht dargestellt) des Kraftfahrzeugs bzw. wird von dieser umschlossen.

Auf den Obergurt 10 sind zwei Luftführungen 14 zu montieren, wie mit Pfeilen 16 verdeutlicht ist. Alternativ kann die Luftführung auch an dem Obergurt 10 angeformt sein. Nach der Montage befinden sich die Luftführungen 14 unter der Motorhaube und im wesentlichen hinter einem Kühlergitter (nicht dargestellt), so dass die Luft, die durch das Kühlergitter gelangt, zu dem hinter den Luftführungen 14 befindlichen Motor (nicht dargestellt) geleitet werden kann. Da die Luftführungen 14 sich in der Nähe des Motors befinden, muss bei der Auswahl des Materials der Luftführungen 14 darauf geachtet werden, dass dieses auch hohen Temperaturen standhält.

An den Luftführungen 14 sind Befestigungselemente 18 angeformt, die eine Montage der Luftführungen 14 auf dem Obergurt 10 ermöglichen. Diese Befestigungselemente 18, die in der Darstellung nur schematisch gezeigt sind, können bspw. als Rasthaken oder Nutführungen ausgebildet sein, die mit Befestigungseinrichtungen (nicht dargestellt) auf dem Obergurt 10 für eine Montage zusammenwirken können. Alternativ oder ergänzend können Montageelemente, wie bspw. Schrauben, Nieten usw., eingesetzt werden.

In der Darstellung ist zu erkennen, dass die Luftführungen 14 in jeweils gegenüberliegenden Seitenteilen 20 Falze 22 aufweisen, die ein Zusammenfalten der Luftführungen 14 und damit ein Verändern des Querschnitts auch im Bereich der beiden Lufteinlassöffnungen 24 ermöglichen. Die Querschnitte im Bereich von Luftauslassöffnungen 26 der Luftführungen 14 bleibt dabei im wesentlichen konstant. Durch Zusammenfalten der Seitenteile 20 der Luftführungen 14 lassen sich somit die durch die Lufteinlassöffnungen 24 gebildeten bzw. definierten Lufteinlassquerschnittsflächen verändern.

Die Luftführungen 14 sind in der dargestellten Ausführungsform als Faltenbälge mit seitlich flexiblen bzw. verschiebbaren Geometrien mit sich überlappenden Fächern dargestellt. Dies ermöglicht ein Einstellen oder auch Verändern der Lufteinlassöffnungen 24 bzw. -flächen in z-Richtung, wie durch Doppelpfeil 30 verdeutlicht ist.

Die Darstellung zeigt den Einsatz von zwei Luftführungen 14, die nebeneinander in einem Montageträger 12 zum Einsatz kommen. Selbstverständlich ist es auch möglich, nur eine Luftführung 14, oder mehr als zwei Luftführungen 14, wie bspw. drei oder vier, typischerweise nebeneinander angeordnet einzusetzen.

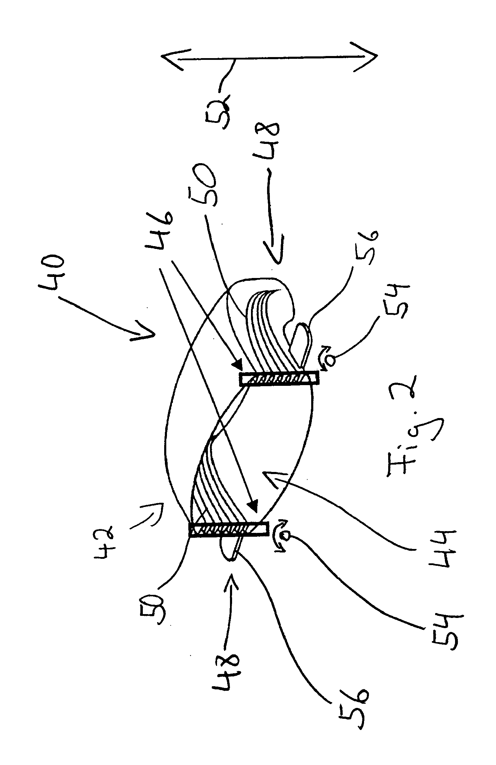

In Figur 2 ist eine weitere mögliche Ausführung der Luftführung, insgesamt mit der Bezugsziffer 40 bezeichnet, dargestellt. Diese als Faltenbalg 42 ausgebildete Luftführung 40 weist im Bereich ihrer Lufteinlassöffnung 44 jeweils seitlich eine Arretiereinrichtung 46 auf, die den Querschnitt der Luftführung 40 im Bereich ihrer Lufteinlassöffnung 44 festlegen, indem das Maß der Faltung von Seitenteilen 48, die mit Falzen 50 versehen sind, festlegbar ist. Auf diese Weise wird die Größe der Lufteinlassöffnung 44 der Luftführung 40 vorab eingestellt, wobei die Querschnittsflächen in anderen Bereichen der Luftführung 40 veränderbar bleiben kann.

Die Arretierungseinrichtungen 46 ermöglichen somit ein Feststellen in z-Richtung (Doppelpfeil 52). Rein schematisch dargestellt sind weiterhin Einstelleinrichtungen 54, die mit den Arretierungseinrichtungen 46 zusammenwirken können und mit denen ein Einstellen der Querschnittsfläche der Luftführung 40 im Bereich der Lufteinlassfläche 44 eingestellt werden kann. Zum Befestigen der Luftführung 40 weist diese seitlich angeformte Befestigungselemente 56 auf.

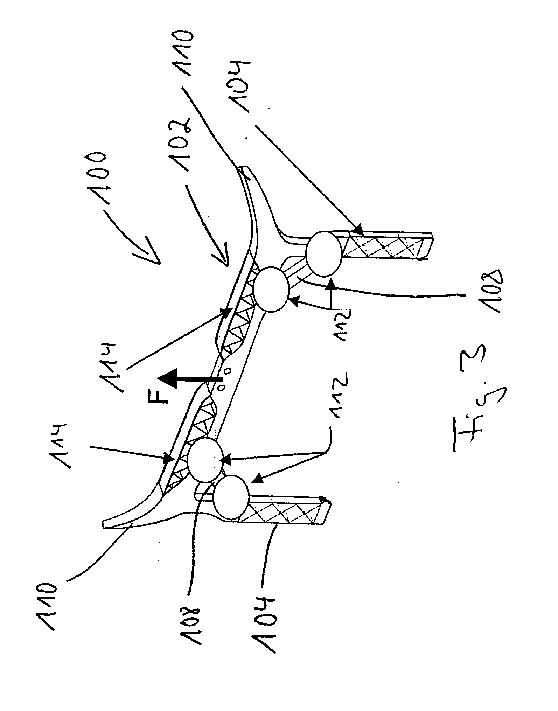

In Figur 3 ist eine mögliche Ausführung des vorgestellten Montageträgers dargestellt, der insgesamt mit der Bezugsziffer 100 versehen ist.

Dieser Montageträger 100 weist einen oberen Querträger 102 und Seitenträger 104 auf. Weiterhin umfasst er Verstärkungsteile, die durch nach unten gebogene Endabschnitte 108 des oberen Querträgers 102 gegeben sind. Der Montageträger 100 kann aus Kunststoff gefertigt sein und verfügt über eine optimierte Krafteinleitung in die Seitenträger 104, d.h. in die Vertikalbereiche. Weiterhin sind seitliche Verstärkungsteile 110 vorgesehen, die ein- oder mehrteilig aufgebaut sein können. Diese sind bspw. aus Metall und/oder verstärkten Platten auf Kunststoffbasis gefertigt.

Die Endabschnitte 108 des oberen Querträgers 102 sind über dargestellte Verbindungsbereiche 112 verbunden. Diese können ein- oder mehrteilig aufgebaut sein und aus Metall und/oder verstärkten Platten auf Kunststoffbasis hergestellt sein.

An dem oberen Querträger 102 kann eine nach oben gerichtete Kraft F, bspw. bei Haubenzug, wirken, die durch die besondere Struktur des dargestellten Montageträgers 100 in die seitlichen Vertikalbereiche umgeleitet wird. Die Verbindung der Endabschnitte 108 und der seitlichen Verstärkungsteile 110 untereinander kann bspw. durch Formschluss und/oder mechanisch, umformtechnisch, Fügen, Schweißen usw. erfolgen.

Auf diese Weise wird eine bauraumoptimierte Gestaltung des Montageträgers 100, insbesondere im oberen Bereich, erreicht, da der obere Querträger 102 weniger massiv aufgebaut sein kann. Dies erlaubt auch eine hinsichtlich des Fußgängerschutzes optimierte Gestaltung im Bereich der Hüftaufprallzone. Es kann bspw. im Bereich oberhalb des oberen Querträgers eine Lufteinlassöffnung, wie diese in Figuren 1 und 2 gezeigt ist, zur Kaltluftzufuhr vorgesehen sein. Hierbei werden die Kaltluftansaugöffnungen aus Kunststoff mit angeformt oder separat montiert und stellen somit eine nachgiebige, verbesserte Struktur hinsichtlich des Fußgängerschutzes dar. Entsprechende Strukturen sind herstellbar, auch wenn z.B. die Kaltluftansaugung an anderer Stelle liegt.

Bei dem dargestellten Montageträger 100 sind oben auf dem oberen Querträger 102 deformierbare Bereiche 114 vorgesehen, die hinsichtlich des Fußgängerschutzes vorteilhaft sind. Dies ist möglich, da der obere Querträger 102 infolge der verbesserten Krafteinleitung in die Vertikalbereiche weniger dick ausgeführt sein kann.

Die Seitenträger 104 und damit die Vertikalbereiche des Montageträgers 100 können im Bedarfsfall ebenfalls mittels den ggf. umspritzten oder montierten seitlichen Verstärkungsteilen 110 versehen sein, um bspw. eine stabile Anbindung zur Befestigung von Querträgern am Rohbau darzustellen. Diese Verstärkungen können entweder direkt aus den seitlichen Bereichen des oberen Querträgers oder durch separat eingelegte oder montierte Verstärkungsteile oder auf andere Weise erfolgen.

Der dargestellte Montageträger 100 ist besser auf eine Krafteinleitung in tragende Strukturen ausgelegt. Die Oberkante im mittleren Bereich des Montageträgers 100 kann nachgiebiger sein, wenn diese deformierbar ausgestaltet ist, und bietet dadurch mehr Potential beim Fußgängerschutz. Durch Verlängerung der Verstärkungen in den vertikalen Seitenbereichen werden Möglichkeiten zur stabilen Anbindung des CMS/ZSB QT (Crashmanagementsystem-Zusammenbauquerträger) geschaffen. Durch Materialkombinationen aus Kunststoffen, verschiedenen Metallen, geformten Kunststoffeinlegeplatten mit verschiedenen Wandstärken usw. können das Bauteilgewicht und das Kraftaufnahmeverhalten gut kombiniert und auf Anforderungen abgestimmt werden.

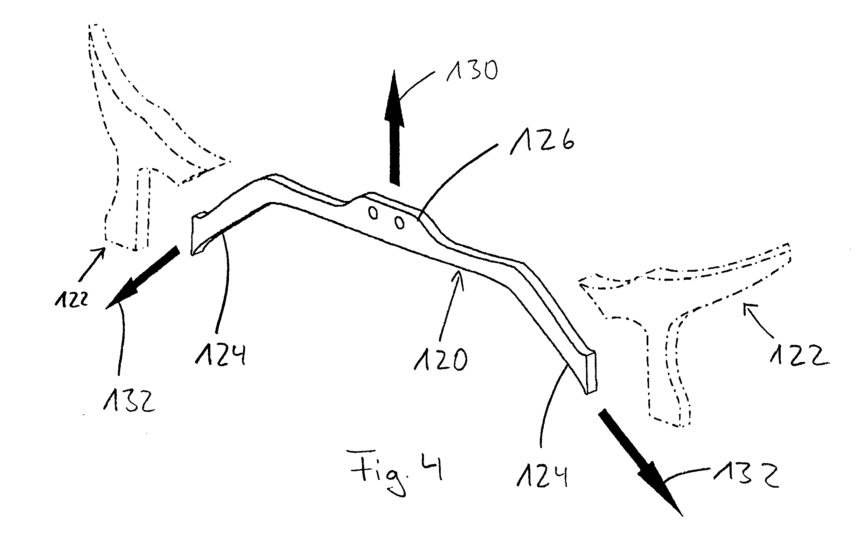

In Figur 4 sind Einlegebauteile für einen oberen Querträger dargestellt. Mit 120 ist das Einlegebauteil für den oberen Querträger selbst und mit Bezugsziffer 122 die Einlegebauteile für die seitlichen, optionalen Verstärkungsteile dargestellt. Es ist zu erkennen, dass seitliche Endabschnitte 124 nach unten gebogen ausgeführt sind und auf diese Weise eine gute Krafteinleitung in seitliche Vertikalbereiche ermöglichen.

Die Kraft wird dabei in einem mittleren Bereich 126 eingeleitet, wo ein Fanghaken, eine Fangvorrichtung oder ein Schloss für eine Motorhaube vorgesehen sein kann.

Pfeil 130 zeigt die nach oben gerichtete Kraft, die durch die besondere Gestaltung, wie Pfeile 132, die die Gegenkraft zeigen, verdeutlichen, unmittelbar in die Rohbaustruktur geleitet wird. Der obere Querträger kann durch Umspritzen der gezeigten Einlegebauteile hergestellt werden.

Die Einlegebauteile können aus Kunststoff, Metall, glasfaserverstärktem Kunststoff, einem Organomaterial usw. gefertigt sein. Sie dienen zur Verstärkung und werden bspw. umspritzt, um die Bauteile des Montageträgers zu fertigen. Wichtig ist, dass diese Einlegebauteile die gute Krafteinleitung in die Rohbaustruktur unterstützen.

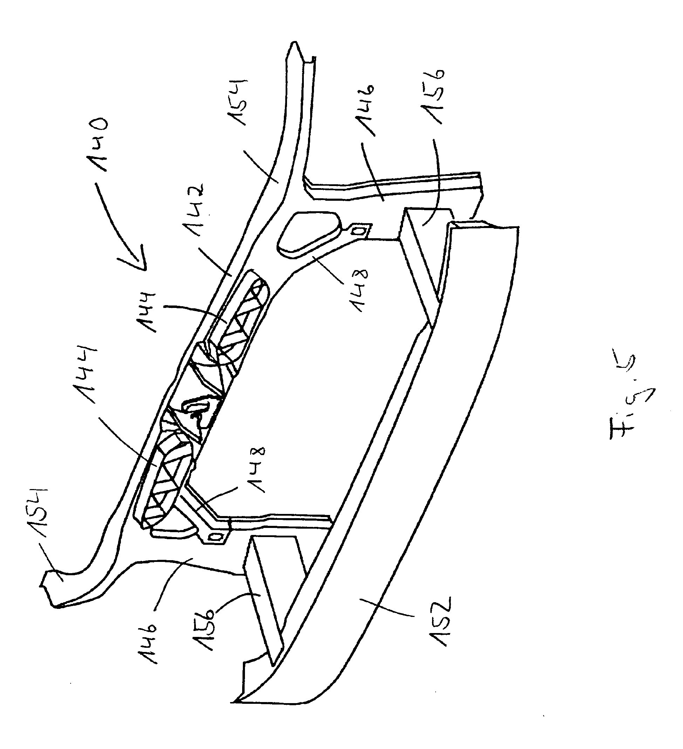

In Figur 5 ist eine weitere Ausführung des beschriebenen Montageträgers, insgesamt mit der Bezugsziffer 140 versehen, dargestellt. Die Darstellung zeigt einen oberen Querträger 142 mit deformierbaren Bereichen 144, Seitenträger 146, nach unten gebogene Endabschnitte 148 des oberen Querträgers 142 als Verstärkungen, einen weiteren Querträger 152, seitliche Verstärkungsteile 154 und sogenannte Crashboxen 156, die zur Energieaufnahme dienen und auch als Element zur Aufnahme der Aufprallenergie bezeichnet werden können.

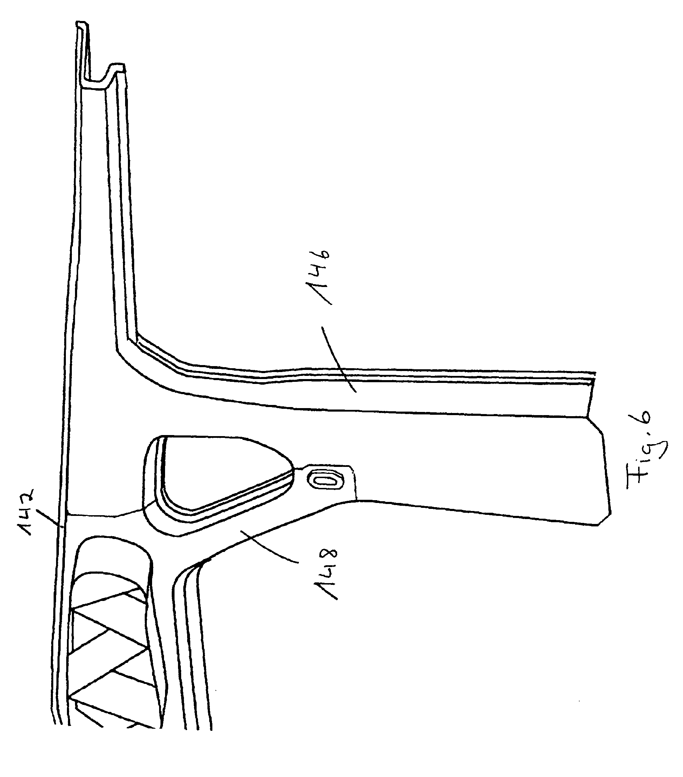

In Figur 6 ist ein Ausschnitt aus Figur 5 gezeigt, wobei der obere Querträger 142, ein deformierbarer Bereich 144, ein nach unten gebogener Endabschnitt 148, ein Seitenträger 146 und ein seitliches Verstärkungsteil 154 dargestellt sind.

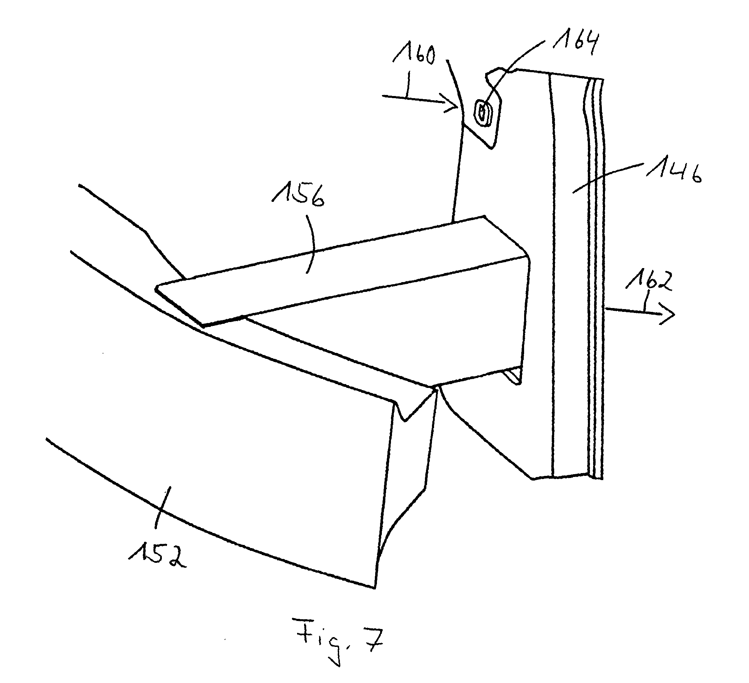

Figur 7 zeigt in einem Ausschnitt der Figur 5 den Seitenträger 146, die Crashbox 156 und den weiteren Querträger 152.

Pfeil 160 zeigt die Richtung der Krafteinleitung, Pfeil 162 zeigt, wie die Kraft in die Rohbaustruktur geleitet wird.

Eine Fügestelle 164 zwischen Seitenträger 146 und einem Endabschnitt des oberen Querträgers kann bspw. geschweißt oder durch Umspritzen mit Kunststoff gefügt sein.

## Patentansprüche

1. Montageträger für ein Kraftfahrzeug, mit
- einem oberen Querträger und
- nach unten hin anschließenden Seitenträgern,
wobei der obere Querträger im Bereich seiner Endabschnitte nach unten gebogen ausgebildet ist.

2. Montageträger nach Anspruch 1, bei dem die Endabschnitte des Montageträgers im wesentlichen in einem Winkel von 45° nach unten gebogen ausgebildet sind.

3. Montageträger nach Anspruch 1 oder 2, bei dem der obere Querträger aus einem Metall gefertigt ist.

4. Montageträger nach Anspruch 1 oder 2, bei dem der obere Querträger aus einem Kunststoff gefertigt ist.

5. Montageträger nach Anspruch 1 oder 2, bei dem der obere Querträger aus einer Metallkombination aus Metall und Kunststoff gefertigt ist.

6. Montageträger nach einem der Ansprüche 1 bis 5, bei dem zusätzlich seitliche Verstärkungsteile vorgesehen sind.

7. Montageträger nach einem der Ansprüche 1 bis 6, bei dem im Bereich des oberen Querträgers zumindest eine Luftführung für Rohluftansaugung des Kraftfahrzeugs vorgesehen ist.

8. Montageträger nach Anspruch 7, bei dem die Luftführung als Schlauch mit einer Lufteinlassöffnung (24, 44) und mit einer Luftauslassöffnung (26) gebildet ist, wobei der Schlauch bzw. die Luftführung (14) derart ausgebildet ist, dass ein Querschnitt des Schlauchs bzw. der Luftführung (14) verändert werden kann.

9. Montageträger nach Anspruch 8, bei dem der Schlauch als Faltenbalg (42) ausgeführt ist.

10. Montageträger nach einem der Ansprüche 7 bis 9, bei dem eine Arretierungseinrichtung (46) zum Festsetzen des Querschnitts im Bereich der Lufteinlassöffnung (24, 44) vorgesehen ist.

11. Oberer Querträger für einen Montageträger, insbesondere für einen Montageträger nach einem der Ansprüche 1 bis 10, der im Bereich seiner Endabschnitte nach unten gebogen ausgeführt ist.

12. Querträger nach Anspruch 11, der im Bereich seiner Oberkante deformierbare Abschnitte aufweist.

13. Querträger nach Anspruch 11, der im oberen Bereich mindestens eine Luftführung für Rohluftansaugung des Kraftfahrzeugs trägt.

14. Querträger nach einem der Ansprüche 11 bis 13, bei dem seitliche Verstärkungsteile vorgesehen sind.
